# EUROPÄISCHE PATENTSCHRIFT

(11) **EP 0 787 550 B1**
(45) Veröffentlichungstag und Bekanntmachung des Hinweises auf die Patenterteilung: **29.12.1999**
(21) Anmeldenummer: 97100528.5
(22) Anmeldetag: 15.01.1997
(51) Int. Cl.: B23B 51/02

(54) **Bohrwerkzeug**
Drill bit
Foret

(30) Priorität: 30.01.1996 DE 19603298
(43) Veröffentlichungstag der Anmeldung: 06.08.1997
(73) Patentinhaber: Berner GmbH, 74653 Künzelsau (DE)
(72) Erfinder: Runge, Erich, 74653 Künzelsau (DE)
(74) Vertreter: Bunke, Holger, Dr.rer.nat. Dipl.-Chem.

(56) Entgegenhaltungen:
- DE-A- 2 403 722
- FR-A- 1 203 363
- US-A- 3 372 763

## Beschreibung

Die Erfindung betrifft ein Bohrwerkzeug mit einer als separates Teil hergestellten Wendel, einem Schneidkopf, einem Einsteckende zum Einsetzen in eine Antriebsvorrichtung und einem zylindrischen Grundkörper zwischen dem Schneidkopf und dem Einsteckende. Bei bislang üblichen Bohrwerkzeugen wird die Wendel des Bohrwerkzeugs durch Fräsen oder Schleifen aus dem Vollen hergestellt. Da aber Werkzeugstahl hart ist, ist die Bearbeitung des Bohrwerkzeugs zur Herausarbeitung der Wendel aufwendig, was das Bohrwerkzeug selbst teuer macht. Dies betrifft insbesondere überlange Bohrwerkzeuge, z.B. Hammerbohrwerkzeuge, die im Bauhandwerk verwendet werden, denn bei den dort teilweise eingesetzten Bohrwerkzeugen von mehr als 500 mm Länge besteht das Bohrwerkzeug selbst zu einem Großteil aus einem zylindrischen Teil zwischen Schneidkopf und Einsteckende mit eingearbeiteter Wendel. Dieser Teil eines Bohrwerkzeugs ist jedoch nicht nur zum Abtransport des herausgebohrten Materials notwendig, sondern auch zur Impuls- und Drehmomentweiterleitung. Bei Hammerbohrwerkzeugen wird aber gerade die Impulsweiterleitung durch die Wendel beeinträchtigt, da der durch sie begründete unkonstante Querschnittsverlauf des zylindrischen Teiles zwischen Schneidkopf und Einsteckende zu einer Dämpfung des Impulses bis zum Schneidkopf selbst führt.

Aus der gattungsgemäßen DE-A-2 403 722 ist ein Bohrwerkzeug bekannt, das ein Kernteil und eine als separates Teil hergestellte Wendel aufweist. Die Wendel ist durch Kleben oder Vulkanisieren auf dem Kernteil befestigt, sie kann aber auch aufgeschrumpft sein. Dann muß jedoch ein elastisches Zwischenrohr aus Kunststoff vorgesehen sein, in die sich die Wendel eindrückt.

Aus der FR-A-1 203 363 ist ein Bohrwerkzeug bekannt, welches aus drei verschiedenen Teilen besteht, nämlich einem Schneidkopf, an den sich einige Wendel anschließen, einem Grundkörper mit Wendel und einem Einsteckende. Diese drei Teile werden durch Schraubverbindungen aneinander befestigt und können ausgetauscht werden.

Aufgabe der Erfindung ist es deshalb, ein Bohrwerkzeug zu schaffen, das einfacher und kostengünstiger herstellbar ist. Bei der Ausbildung des Bohrwerkzeugs als Hammerbohrwerkzeug soll dieses zudem eine verbesserte Impulsweiterleitung zum Schneidkopf aufweisen. Weiter sollen einfache Verfahren zur Herstellung des erfindungsgemäßen Bohrwerkzeuges angegeben werden.

Die Aufgabe zur Schaffung eines verbesserten Bohrwerkzeugs wird bei einem Bohrwerkzeug der eingangs genannten Gattung dadurch gelöst, daß die Wendel unmittelbar auf den zylindrischen Grundkörper aufgeschrumpft ist.

Die Aufgabe zur Schaffung eines Verfahrens zur Herstellung des erfindungsgemäßen Bohrwerkzeugs wird durch die folgenden Schritte gelöst:
a) Herstellen der Wendel durch Wickeln eines Materials um einen zylindrischen Körper, dessen Außendurchmesser geringer als der Außendurchmesser des Grundkörpers ist,
b) Entspannen der Wendel auf dem zylindrischen Körper zur Vergrößerung von deren Innendurchmesser,
c) Entfernen der Wendel, wenn sich die Wendel in entspanntem Zustand befindet,
d) Einsetzen des Grundkörpers in die entspannte Wendel, und
e) Aufschrumpfen der Wendel auf den Grundkörper.

Da das Wickeln des Materials zur Herstellung der Wendel unter Spannung erfolgt, muß zur Vergrößerung des Innendurchmessers der Wendel lediglich die Wickelkraft gelöst werden. Daraufhin federt die Wendel radial nach außen, um den größeren Innendurchmesser einzunehmen, worauf sie sich in entspanntem Zustand befindet.

Darüber hinaus wird die Aufgabe zur Schaffung eines Verfahrens zur Herstellung des erfindungsgemäßen Bohrwerkzeugs auch durch die folgenden Schritte gelöst:
a) Herstellen der Wendel durch Wickeln eines Materials um einen zylindrischen Körper, dessen Außendurchmesser geringer als der Außendurchmesser des Grundkörpers ist,
b) Aufbringen einer Kraft auf die Wendel zur Vergrößerung von deren Innendurchmesser,
c) Entfernen des zylindrischen Körpers, wenn sich die Wendel in vorgespanntem Zustand befindet,
d) Einsetzen des Grundkörpers in die vorgespannte Wendel, und
e) Aufschrumpfen der Wendel auf den Grundkörper.

Das erfindungsgemäße Bohrwerkzeug weist nicht mehr eine einstückig mit dem Bohrwerkzeug verbundene oder über ein elastisches Rohr mit dem Grundkörper verbundene Wendel, sondern eine separat hergestellte, unmittelbar auf dem Grundkörper aufgeschrumpfte Wendel auf. Das aufwendige Fräsen oder Schleifen des Bohrwerkzeugs zur Herstellung der Wendel kann damit entfallen. Die Wendel selbst, welche für sich somit hauptsächlich die Aufgabe des Abtransports des herausgebohrten Materials hat, kann zudem aus günstigerem Material als das übrige, üblicherweise aus hochfestem Material hergestellte Bohrwerkzeug sein. Die Verbindung zwischen Wendel und Grundkörper erfolgt durch ein einfaches Aufschrumpfen, d.h., daß die Wendel im noch nicht auf den Grundkörper aufgebrachten Zustand einen kleineren Innendurchmesser im Vergleich zum Außendurchmesser des Grundkörpers hat. Beim Aufbringen der Wendel auf den Grundkörper wird diese aufgrund des größeren Außendurchmesser des Grundkörpers vorgespannt, so daß sich eine radial nach innen gerichtete Kraft ergibt, durch die sich die Wendel selbst am Grundkörper hält.

Weiter ist es durch das erfindungsgemäße Bohrwerkzeug möglich, Wendeln von großer axialer Länge herzustellen und diese entsprechend der axialen Erstreckung des jeweiligen Grundkörpers entsprechend abzulängen. Auch können, entsprechend einem Baukasten- oder Modulsystem, verschieden große und lange Wendeln auf Vorrat hergestellt werden, die bei Bedarf auf entsprechende Grundkörper aufgeschrumpft werden. Dadurch ist es möglich, ein modulares, auf den jeweiligen Einsatzfall abgestimmtes Werkzeug zusammenzustellen. Dabei bestehen der Grundkörper und die Wendel vorzugsweise aus Stahl, wobei jedoch die Wendel ebenso wie der Grundkörper auch aus anderen Materialien, z.B. Verbundmaterial, herstellbar sind.

Gemäß einer bevorzugten Ausführungsform der Erfindung liegt die Wendel mit ihrer gesamten radial nach innen gewandten Seitenfläche am Grundkörper an, d.h. die Seitenfläche ist mit keinen Vorsprüngen oder Vertiefungen versehen, die nur zu einem partiellen Anliegen der Wendel am Grundkörper führen würden.

Gemäß einer weiteren Ausführungsform ist die Wendel aus Sicherheitgründen an ihrem Anfangs- und Endpunkt durch Schweißen oder Löten am Grundkörper zusätzlich befestigt, was bei besonders hoher Bohrwerkzeugbeanspruchung erforderlich sein kann.

In einer bevorzugten Ausführungsform ist die Wendel so zur Werkzeugachse geneigt, daß ihre dem Einsteckende zugewandte Seite mit der Werkzeugachse einen spitzen Winkel einschließt. Damit ist gewährleistet, daß das herausgebohrte Material immer zur Werkzeugachse hin, d.h. radial nach innen gedrängt wird und zu keinem Verklemmen des Bohrwerkzeugs am radialen Außenumfang der Wendel im Bohrloch führt. Die Wendel ist somit schöpfend ausgebildet.

Vorzugsweise, aber nicht notwendigerweise, ist der Grundkörper hohl ausgebildet.

Das hohle Innere des Grundkörpers kann dabei gemäß einer Ausführungsform als Absaugrohr für herausgebohrtes Material ausgebildet sein und/oder in seinem Inneren zumindest einen Schmierfluidförderkanal aufweisen. Damit ist es möglich, nicht nur das herausgebohrte Material aus dem Bohrloch zu entfernen, sondern auch Schmierfluid und Kühlfluid unmittelbar zum Schneidkopf selbst zu fördern.

Bei dem erfindungsgemäßen Bohrwerkzeug kann die Modulbauweise noch vorzugsweise dadurch verfeinert werden, daß der Schneidkopf als separat hergestelltes Teil ausgebildet ist, das mit dem Grundkörper verbunden ist.

Weiter kann auch das Einsteckende als separat hergestelltes Teil mit dem Grundkörper verbunden sein, wodurch es möglich ist, den zylindrischen Grundkörper aus billigerem Stahl zu fertigen und den Schneidkopf und das Einsteckende, welche besonders beansprucht werden, aus für die auftretenden Beanspruchungen geeigneterem Material herzustellen. Auch ist dadurch die Möglichkeit geschaffen worden, Schneidkopf, Grundkörper, Wendel und Einsteckende auf ihre spezielle Funktion hin optimiert auszubilden und, je nach Einsatzgebiet, flexibel zusammenzustellen. Damit kann ein modulares Werkzeug aufgebaut werden, bei dem Teilfunktionen weitgehend von den Einzelkomponenten übernommen werden, so daß die bislang erforderlichen Kompromisse bei sich gegenseitig beeinflussenden Teilfunktionen von Einzelabschnitten des Bohrwerkzeugs in den Hintergrund treten können. Der modulare Aufbau gestattet eine typenunabhängige Fertigung der einzelnen Teile des Bohrwerkzeugs. Auch können, durch einfaches Ablängen der einzelnen Teile, deutlich kostengünstiger spezielle Bohrwerkzeuge hergestellt werden, z.B. Bohrwerkzeuge mit einem besonders langen oder kurzen Grundkörper mit Wendel.

Bevorzugt ist jedes separat hergestellte Teil, also der Schneidkopf und/oder das Einsteckende durch Reibschweißen, Löten oder durch Vorsehen einer Schraubverbindung mit dem Grundkörper verbunden. Die Wendel selbst kann durch Reibschweißen oder Löten nach dem Schrumpfen auf dem Grundkörper befestigt werden.

Das Einsteckende weist entsprechend einer weiteren Ausführungsform Ausnehmungen zur formschlüssigen Drehmomentübertragung auf, z.B. ein Vielnutprofil.

Das erfindungsgemäße Bohrwerkzeug ist für seine Ausbildung als Hammerbohrwerkzeug besonders geeignet, da hierbei die Impulsweiterleitung vom Einsteckende zum Schneidkopf nahezu ungedämpft ausschließlich über den zylindrischen Grundkörper erfolgt. Die Verbindung der Wendel am Grundkörper ohne Änderung des Außen- oder, bei einem hohlen Grundkörper, Innendurchmessers des Grundkörpers führt zu einer optimierten Impulsweiterleitung. Zudem wird auch eine Kerbwirkung vermieden.

Beim erfindungsgemäßen Bohrwerkzeug besteht auch die Möglichkeit, die Wendel vom Grundkörper zu entfernen und eine neue Wendel, gegebenenfalls mit anderen Abmessungen, wieder auf den Grundkörper aufzubringen. Dank der möglichen Modulbauweise können auch andere Teile des Bohrwerkzeugs, z.B. der Schneidkopf oder das Einsteckende, zum Reparieren oder für andere Aufgaben durch neue Teile oder Teile mit anderen Abmessungen ausgetauscht werden.

Die erfindungsgemäßen Verfahren zur Herstellung des Bohrwerkzeugs sind besonders einfach und kostengünstig. Um einen gleichbleibenden Innendurchmesser der Wendel zu erreichen, wird Material um einen zylindrischen Körper gewickelt, der einen Außendurchmesser hat, welcher geringer als der des Grundkörpers ist. Dadurch ergibt sich beim späteren Aufbringen der Wendel auf den Grundkörper die Vorspannkraft der Wendel, so daß diese auf den Grundkörper aufgeschrumpft wird. Bei den erfindungsgemäßen Verfahren ist keine spanende Bearbeitung außer der Ablängung der Wendel selbst vorgesehen, was sie kostengünstig macht.

Das Einsetzen des Grundkörpers in die Wendel erfolgt insbesondere bei dem ersten oben beschriebenen Verfahren am einfachsten durch axiales Einschieben und Eindrehen des Grundkörpers in die entspannte Wendel. Nach Entfernen der auf die Wendel aufgebrachten Kraft durch das Einschieben und Eindrehen schrumpft diese auf den Grundkörper auf und wandert selbst bei Beanspruchung nicht auf diesem.

Zum Entfernen der Wendel vom zylindrischen Körper gemäß dem zweiten oben beschriebenen Verfahren wird einfach eine entsprechende Kraft auf die Wendel aufgebracht, so daß sich diese elastisch verformt und einen größeren Innendurchmesser einnimmt.

Gemäß einer bevorzugten Ausführungsform wird Schritt b) des zweiten Verfahrens durch Aufbringen einer Axialkraft und/oder eines Drehmoments entgegen der Wickelrichtung auf die Wendel durchgeführt. Durch Aufbringen der Axialkraft allein vergrößert sich bereits der Innendurchmesser der Wendel, wie bei einer zusammengedrückten Schraubenfeder. Zusätzlich oder fakultativ kann der Innendurchmesser auch durch Aufbringen eines Drehmoments vergrößert werden, indem die Wendel beispielsweise an ihren Enden festgehalten und anschließend das Drehmoment aufgebracht wird.

Die bevorzugte Ausführungsform sieht vor, daß die Wendel aus einem Flachstahl gewickelt wird, z.B. aus einem genormten Flach- oder Bandstahl.

Die Erfindung wird nachfolgend unter Bezugnahme auf eine bevorzugte Ausführungsform erläutert, die in den beigefügten Zeichnungen dargestellt ist. In diesen ist:
- Fig. 1: eine Seitenansicht eines bei dem erfindungsgemäßen Bohrwerkzeug einsetzbaren Einsteckendes;
- Fig. 2: eine Seitenansicht eines weiteren bei dem erfindungsgemäßen Bohrwerkzeug einsetzbaren Einsteckendes;
- Fig. 3: eine Seitenansicht eines zylindrischen Grundkörpers, auf den die Wendel aufschrumpfbar ist;
- Fig. 4: eine Seitenansicht einer beim erfindungsgemäßen Bohrwerkzeug eingesetzten, separat hergestellten Wendel;
- Fig. 5: eine Seitenansicht eines beim erfindungsgemäßen Bohrwerkzeug eingesetzten Schneidkopfes; und
- Fig. 6: ein aus den Einzelteilen nach den Figuren 2 bis 5 zusammengesetztes, erfindungsgemäßes Bohrwerkzeug.

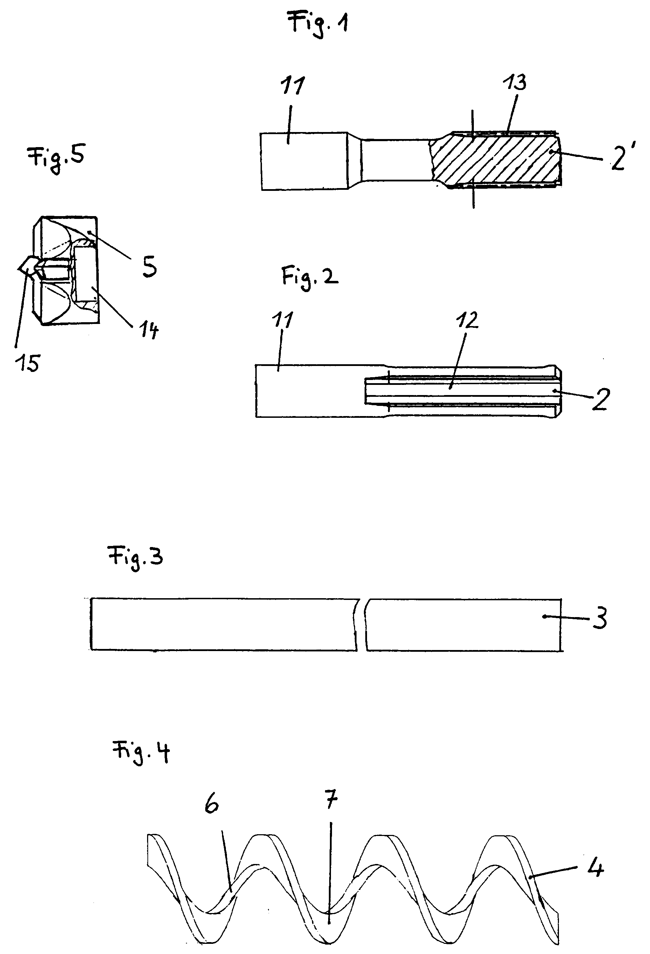

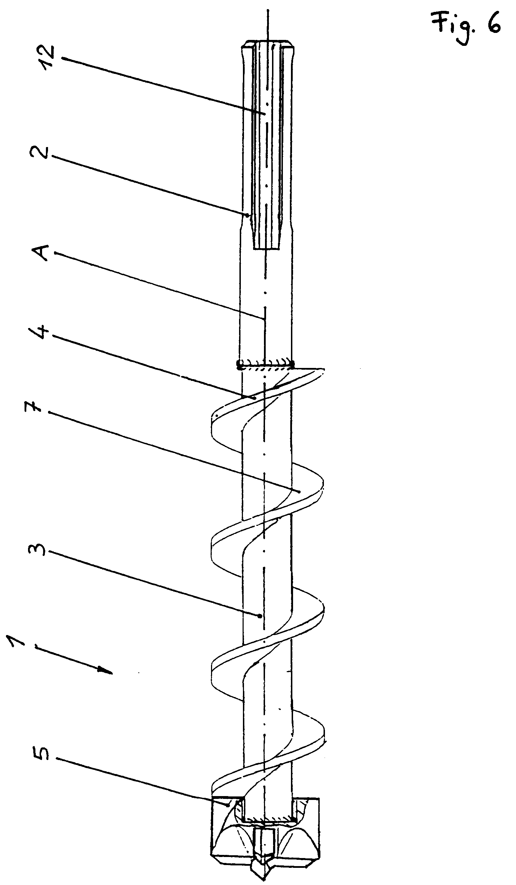

In Fig. 6 ist ein aus mehreren Einzelteilen zusammengesetztes Bohrwerkzeug 1, das als Hammerbohrwerkzeug ausgebildet ist, gezeigt. Das Bohrwerkzeug 1 umfaßt dabei ein Einsteckende 2, einen sich daran anschließenden zylindrischen Grundkörper 3 mit einer Wendel 4 sowie einen Schneidkopf 5. Diese Einzelteile sind in den Figuren 2 bis 5 separat gezeigt.

Das Einsteckende 2 ist gemäß Fig. 2 mit einer Längsnut 12 versehen, die sich von einem stirnseitigen Ende des Einsteckendes 2 bis zu einem Schaftteil 11, welcher einen gleichbleibenden Außendurchmesser aufweist, erstreckt. Die Längsnut 12 bildet eine Ausnehmung zur formschlüssigen Drehmomentübertragung beim Einsetzen des Bohrwerkzeugs 1 in eine Antriebsvorrichtung, z.B. eine Bohrmaschine.

Darüber hinaus ist es auch möglich, andere Einsteckenden, z.B. ein in Fig. 1 gezeigtes Einsteckende 2' mit einem Vielnutprofil 13 zur formschlüssigen Drehmomentübertragung zu verwenden.

Der Außendurchmesser des Schaftteils 11 entspricht gemäß Fig. 6 dem Außendurchmesser des zylindrischen Grundkörpers 3, welcher separat in Fig. 3 gezeigt ist, er kann jedoch auch größer oder kleiner als der Außendurchmesser des zylindrischen Grundkörpers 3 sein. Der Grundkörper 3 weist keinerlei Eindrehungen oder dergleichen auf.

Die in Fig. 4 gezeigte Wendel 4, die aus einem Flachstahl gewickelt ist, hat einen Innendurchmesser, der in nicht montiertem Zustand kleiner als der Außendurchmesser des Grundkörpers 3 ist. Die Wendel 4 ist weiter so ausgebildet, daß eine radial nach innen gerichtete Seitenfläche 6 auf einer Mantelfläche eines fiktiven Zylinders liegt.

Der in Fig. 5 gezeigte Schneidkopf 5 umfaßt mehrere im Schneidkopf 5 eingelötete Hartmetallschneiden 15 an einer Stirnseite. An der gegenüberliegenden Stirnseite ist im Schneidkopf 5 eine koaxiale Ausnehmung 14 vorgesehen, deren Durchmesser im wesentlichen dem Außendurchmesser des zylindrischen Grundkörpers 3 entspricht, so daß bei einem Einsetzen des Grundkörpers 3 in die Ausnehmung 14 die beiden Teile zueinander zentriert sind.

Das in Fig. 6 gezeigte Bohrwerkzeug 1 wird durch nicht lösbares Verbinden der in den Figuren 2 bis 5 gezeigten Einzelteile hergestellt. Die Wendel 4 selbst wird durch Wickeln eines Flachstahls, z.B. eines Flachstahls mit einem 3 x 12 mm großen Querschnitt, um einen zylindrischen Körper erzeugt, dessen Außendurchmesser geringer als der Außendurchmesser des Grundkörpers 3 ist. Das Wickeln kann durch mehrere entsprechend aufeinander abgestimmte Rollen erfolgen, zwischen denen der Flachstahl hindurchgeführt und an die Mantelfläche des zylindrischen Körpers gedrückt wird.

Die Herstellung der Wendel 4 durch Wickeln eines Materials um einen zylindrischen Körper erfolgt unter Aufbringung von radialen Kräften, die eine Spannung in der Wendel 4 hervorrufen. Zum Vergrößern des Innendurchmessers der Wendel 4 wird diese auf dem zylindrischen Körper entspannt, so daß anschließend die Wendel 4 vom zylindrischen Körper abgezogen und entfernt werden kann. Der Grundkörper 3 wird daraufhin in die entspannte Wendel 4 durch axiales Einschieben und Eindrehen eingesetzt. Wenn die beim Einsetzen aufgebrachten Kräfte und Drehmomente entfernt werden, kann die Wendel 4 auf den Grundkörper 3 aufschrumpfen, da dieser einen größeren Außendurchmesser als der beim Wickeln verwendete zylindrische Körper hat.

Alternativ zu diesen Verfahren kann die Wendel 4 auch an ihren axialen Enden gehalten und axial zusammengedrückt werden, nachdem sie um den zylindrischen Körper gewickelt worden ist, so daß sich ihr Innendurchmesser vergrößert und der zylindrische Körper herausgezogen werden kann. Unter Beibehaltung der auf die Wendel 4 ausgeübten Kraft wird der Grundkörper 3, der zuvor durch Reibschweißen mit dem Schneidkopf 5 und dem Einsteckende 2 stirnseitig verbunden worden ist, zusammen mit dem Einsteckende 2 axial in die Wendel 4 eingeschoben. Ist der Außendurchmesser des Grundkörpers 3 im Vergleich zum Innendurchmesser der Wendel 4 besonders groß, so ist es erforderlich, daß die Wendel 4 durch Aufbringen eines Drehmoments entgegen der Wickelrichtung noch weiter elastisch so weit verformt wird, bis der Grundkörper 3 zusammen mit dem Einsteckende 2 axial in die Wendel 4 eingeschoben werden kann. Sobald die auf die Wendel 4 aufgebrachten Kräfte und Drehmomente entfernt werden, federt die Wendel 4 radial nach innen elastisch ein und versucht, ihren ursprünglichen Innendurchmesser einzunehmen, wodurch sie auf den Grundkörper 3 aufschrumpft.

Die von der Wendel 4 aufgebrachte, radial nach innen gerichtete Kraft ist so groß, daß sie ohne Vorsehen von Eindrehungen im Grundkörper 3 auf diesem durch Schrumpfen kraftschlüssig befestigt ist. Die Wendel 4 liegt mit ihrer gesamten radial nach innen gewandten Seitenfläche 6 am Grundkörper 3 an und wandert auf dem Grundkörper 3 selbst dann nicht, wenn sich das Bohrwerkzeug 1 in einem annähernd fertig gebohrten Loch dreht.

Fakultativ ist es jedoch möglich, am Anfangs- und Endpunkt der Wendel 4 diese am Grundkörper 3 zusätzlich anzuschweißen oder anzulöten.

Neben den bislang beschriebenen Herstellungsverfahren ist es auch möglich, zuerst die Wendel 4 auf dem Grundkörper 3 aufzuschrumpfen und anschließend den Schneidkopf 5 und das Einsteckende 2 mit dem Grundkörper 3 durch Reibschweißen oder eine andere Art der Verbindung miteinander zu befestigen.

Wichtig dabei ist, daß der Anfang der Wendel 4, welcher dem Schneidkopf 5 zugewandt ist, direkt am Schneidkopf 5 anliegt, so daß ein ununterbrochener Abtransport von herausgebohrtem Material aus dem Bohrloch gewährleistet ist. Um den Transport dieses Materials und damit auch die Bohreigenschaften des Bohrwerkzeugs 1 zu verbessern, ist die Wendel 4 so ausgebildet, daß ihre dem Einsteckende 2 zugewandte Seite 7 mit der Werkzeugachse A einen spitzen Winkel einschließt. Herausgebohrtes Material wandert damit bei Drehung des Bohrwerkzeugs 1 stets in Richtung zur Werkzeugachse A, um von dort in Richtung zum Einsteckende 2 transportiert zu werden.

Darüber hinaus ist es zur Verbesserung der Bohreigenschaften auch möglich, den zylindrischen Grundkörper 3 sowie gegebenenfalls auch das Einsteckende 2 hohl auszubilden, so daß zumindest der Grundkörper 3 als Absaugrohr für herausgebohrtes Material dient. Hierzu können auch entsprechende Ausnehmungen im Schneidkopf 5, welche in den Zeichnungen nicht dargestellt sind, vorgesehen sein. Weiter kann das Innere des Grundkörpers 3 zumindest einen Schmierfluidförderkanal aufweisen, über den Schmierfluid zum Schneidkopf 5 und zu den Hartmetallschneiden 15 gefördert wird.

Das in den Figuren gezeigte Bohrwerkzeug 1 ist wie ein Baukastensystem aufgebaut, d.h. es können verschiedene Einzelteile auf den jeweiligen Einsatzfall bezogen zusammengefügt werden. So sind beispielsweise Hammerbohrwerkzeuge von unterschiedlicher axialer Länge einfach dadurch herstellbar, daß auf unterschiedlich lange Grundkörper 3 entsprechende Wendeln 4 aufgeschrumpft werden und anschließend z.B. stets die gleichen Schneidköpfe 5 und Einsteckenden 2 am Grundkörper 3 durch Reibschweißen oder Löten befestigt werden. Die Herstellung eines Bohrwerkzeugs wird damit vereinfacht und verbilligt, denn die Einzelteile können für sich auf kostengünstige Weise hergestellt werden. Zudem kann von seiten des Herstellers wesentlich flexibler auf die Wünsche des Kunden eingegangen werden, da ohne Mehrkosten zahlreiche Kombinationsmöglichkeiten von Einzelteilen des Bohrwerkzeugs 1 realisierbar sind.

Neben der in Fig. 6 gezeigten, nicht lösbaren Verbindung von Einsteckende 2, Grundkörper 3 und Schneidkopf 5 ist es selbstverständlich auch möglich, diese Einzelteile lösbar, z.B. durch Schraubverbindungen, aneinander zu arretieren.

## Patentansprüche

1. Bohrwerkzeug mit einer als separates Teil hergestellten Wendel (4), einem Schneidkopf (5), einem Einsteckende (2) zum Einsetzen in eine Antriebsvorrichtung und einem zylindrischen Grundkörper (3) zwischen dem Schneidkopf (5) und dem Einsteckende (2), **dadurch gekennzeichnet**, daß die Wendel (4) unmittelbar auf den zylindrischen Grundkörper (3) aufgeschrumpft ist.

2. Bohrwerkzeug nach Anspruch 1, **dadurch gekennzeichnet**, daß die Wendel (4) mit ihrer gesamten radial nach innen gewandten Seitenfläche (6) am Grundkörper (3) anliegt.

3. Bohrwerkzeug nach Anspruch 1 oder 2, **dadurch gekennzeichnet**, daß die Wendel (4) zumindest an ihrem Anfangs- und Endpunkt durch Schweißen oder Löten am Grundkörper (3) zusätzlich befestigt ist.

4. Bohrwerkzeug nach einem der Ansprüche 1 bis 3, **dadurch gekennzeichnet**, daß die Wendel (4) so zur Werkzeugachse (A) geneigt ist, daß ihre dem Einsteckende (2) zugewandte Seite (7) mit der Werkzeugachse (A) einen spitzen Winkel einschließt.

5. Bohrwerkzeug nach einem der Ansprüche 1 bis 4, **dadurch gekennzeichnet**, daß der Grundkörper (3) hohl ausgebildet ist.

6. Bohrwerkzeug nach Anspruch 5, **dadurch gekennzeichnet**, daß der Grundkörper (3) als Absaugrohr für herausgebohrtes Material ausgebildet ist.

7. Bohrwerkzeug nach Anspruch 5 oder 6, **dadurch gekennzeichnet**, daß der Grundkörper (3) in seinem Inneren zumindest einen Schmierfluidförderkanal aufweist.

8. Bohrwerkzeug nach einem der Ansprüche 1 bis 7, **dadurch gekennzeichnet**, daß der Schneidkopf (5) als separat hergestelltes, mit dem Grundkörper (3) verbundenes Teil ausgebildet ist.

9. Bohrwerkzeug nach einem der Ansprüche 1 bis 8, **dadurch gekennzeichnet**, daß das Einsteckende (2) als separat hergestelltes, mit dem Grundkörper (3) verbundenes Teil ausgebildet ist.

10. Bohrwerkzeug nach einem der Ansprüche 1 bis 9, **dadurch gekennzeichnet**, daß das Einsteckende (2) und/oder der Schneidkopf (5) durch Reibschweißen, Löten oder Schrauben mit dem Grundkörper (3) verbunden sind/ist.

11. Bohrwerkzeug nach einem der Ansprüche 1 bis 10, **dadurch gekennzeichnet**, daß das Einsteckende (2) Ausnehmungen (12; 13) zur formschlüssigen Drehmomentübertragung aufweist.

12. Bohrwerkzeug nach einem der Ansprüche 1 bis 11, **dadurch gekennzeichnet**, daß das Bohrwerkzeug (1) als Hammerbohrwerkzeug ausgebildet ist.

13. Verfahren zur Herstellung eines Bohrwerkzeugs nach einem der Ansprüche 1 bis 12, **gekennzeichnet durch** folgende Schritte:
a) Herstellen der Wendel (4) durch Wickeln eines Materials um einen zylindrischen Körper, dessen Außendurchmesser geringer als der Außendurchmesser des Grundkörpers (3) ist,
b) Entspannen der Wendel (4) auf dem zylindrischen Körper zur Vergrößerung von deren Innendurchmesser,
c) Entfernen der Wendel (4), wenn sich die Wendel (4) in entspanntem Zustand befindet,
d) Einsetzen des Grundkörpers (3) in die entspannte Wendel (4), und
e) Aufschrumpfen der Wendel (4) auf den Grundkörper (3).

14. Verfahren zur Herstellung eines Bohrwerkzeugs nach einem der Ansprüche 1 bis 12, **gekennzeichnet durch** folgende Schritte:
a) Herstellen der Wendel (4) durch Wickeln eines Materials um einen zylindrischen Körper, dessen Außendurchmesser geringer als der Außendurchmesser des Grundkörpers (3) ist,
b) Aufbringen einer Kraft auf die Wendel (4) zur Vergrößerung von deren Innendurchmesser,
c) Entfernen des zylindrischen Körpers, wenn sich die Wendel (4) in vorgespanntem Zustand befindet,
d) Einsetzen des Grundkörpers (3) in die vorgespannte Wendel (4), und
e) Aufschrumpfen der Wendel (4) auf den Grundkörper (3).

15. Verfahren nach Anspruch 14, **dadurch gekennzeichnet**, daß der Schritt b) durch Aufbringen einer Axialkraft und/oder eines Drehmoments entgegen der Wickelrichtung auf die Wendel (4) erfolgt.

16. Verfahren nach einem der Ansprüche 13 bis 15, **dadurch gekennzeichnet**, daß der Schritt d) durch axiales Einschieben und Eindrehen des Grundkörpers (3) in die Wendel (4) erfolgt.

17. Verfahren nach einem der Ansprüche 13 bis 16, **dadurch gekennzeichnet**, daß die Wendel (4) aus einem Flachstahl gewickelt wird.

## Claims

1. A drilling tool comprising a twist (4) produced as a separate part, a cutter head (5), an insert end (2) for inserting in a driving device and a cylindrical base body (3) between said cutter head (5) and said insert end (2), characterized in that said twist (4) is shrunk directly onto said cylindrical base body (3).

2. The drilling tool as set forth in claim 1, characterized in that said twist (4) is in contact with said base body (3) by its full side face (6) facing radially inwards.

3. The drilling tool as set forth in claim 1 or 2, characterized in that said twist (4) is additionally secured by welding or soldering at least at its starting and end points to said base body (3).

4. The drilling tool as set forth in any of the claims 1 to 3, characterized in that said twist (4) is inclined to the tool centerline (A) such that its side (7) facing said insert end (2) forms an acute angle to said tool centerline (A).

5. The drilling tool as set forth in any of the claims 1 to 4, characterized in that said base body (3) is configured hollow.

6. The drilling tool as set forth in claim 5, characterized in that said base body (3) is configured as a suction tube for the drilled material.

7. The drilling tool as set forth in claim 5 or 6, characterized in that said base body (3) comprises in its interior at least one lubricating fluid delivery passage.

8. The drilling tool as set forth in any of the claims 1 to 7, characterized in that said cutter head (5) is configured as a part produced separately and connected to said base body (3).

9. The drilling tool as set forth in any of the claims 1 to 8, characterized in that said insert end (2) is configured as a part produced separately and connected to said base body (3).

10. The drilling tool as set forth in any of the claims 1 to 9, characterized in that said insert end (2) and/or said cutter head (5) is/are connected to said base body (3) by friction welding, soldering or screwing.

11. The drilling tool as set forth in any of the claims 1 to 10, characterized in that said insert end (2) comprises recesses (12; 13) for positive torque transmission.

12. The drilling tool as set forth in any of the claims 1 to 11, characterized in that said drilling tool (1) is configured as a hammer drill.

13. A method of fabricating a drilling tool as set forth in any of the claims 1 to 12, characterized by the following steps:
(a) producing said twist (4) by coiling a material about a cylindrical body, the outer diameter of which is less than the outer diameter of said base body (3),
(b) relaxing said twist (4) on said cylindrical body to increase its inner diameter,
(c) removing said twist (4) when said twist (4) is in its relaxed condition,
(d) inserting said base body (3) into said relaxed twist (4), and
(e) shrinking said twist (4) onto said base body (3).

14. A method of fabricating a drilling tool as set forth in any of the claims 1 to 12, characterized by the following steps:
(a) producing said twist (4) by coiling a material about a cylindrical body, the outer diameter of which is less than the outer diameter of said base body (3),
(b) applying a force to said twist (4) to increase its inner diameter,
(c) removing said cylindrical body when said twist (4) is in its pretensioned condition,
(d) inserting said base body (3) into said pretensioned twist (4), and
(e) shrinking said twist (4) onto said base body (3).

15. The method as set forth in claim 14, characterized in that step b) is done by applying an axial force and/or a torque opposing the coiling direction to said twist (4).

16. The method as set forth in any of the claims 13 to 15, characterized in that step d) is done by axially inserting and turning said base body (3) into said twist (4).

17. The method as set forth in any of the claims 13 to 16, characterized in that said twist (4) is coiled from flat steel.

## Revendications

1. Outil de perçage comprenant une hélice (4), fabriquée en tant que pièce séparée, une tête de coupe (5), une extrémité de fixation (2), destinée à être introduite dans un dispositif d'entraînement, et un corps de base cylindrique (3) entre la tête de coupe (5) et l'extrémité de fixation (2), caractérisé en ce que l'hélice (4) est assemblée par frettage directement sur le corps de base cylindrique (3).

2. Outil de perçage selon la revendication 1, caractérisé en ce que l'hélice (4) entre en contact avec le corps de base (3), avec toute sa surface latérale (6) orientée dans le sens radial vers l'intérieur.

3. Outil de perçage selon la revendication 1 ou 2, caractérisé en ce que l'hélice (4), au moins à son point de départ et à son point d'arrivée, est fixée en plus par soudage ou brasage contre le corps de base (3).

4. Outil de perçage selon l'une quelconque des revendications 1 à 3, caractérisé en ce que l'hélice (4) est inclinée vers l'axe du foret (A), de telle sorte que sa face (7) orientée vers l'extrémité de fixation (2) forme un angle aigu avec l'axe du foret (A).

5. Outil de perçage selon l'une quelconque des revendications 1 à 4, caractérisé en ce que le corps de base (3) est un corps creux.

6. Outil de perçage selon la revendication 5, caractérisé en ce que le corps de base (3) est conçu en forme de tube d'aspiration de la matière débourrée.

7. Outil de perçage selon la revendication 5 ou 6, caractérisé en ce que le corps de base (3) comporte à l'intérieur au moins un canal d'arrivée du fluide de lubrification.

8. Outil de perçage selon l'une quelconque des revendications 1 à 7, caractérisé en ce que la tête de coupe (5) est formée par une pièce fabriquée séparément et assemblée avec le corps de base (3).

9. Outil de perçage selon l'une quelconque des revendications 1 à 8, caractérisé en ce que l'extrémité de fixation (2) est formée par une pièce fabriquée séparément et assemblée avec le corps de base (3).

10. Outil de perçage selon l'une quelconque des revendications 1 à 9, caractérisé en ce que l'extrémité de fixation (2) et/ou la tête de coupe (5) est ou sont assemblée(s) avec le corps de base (3) par soudage par friction, brasage ou vissage.

11. Outil de perçage selon l'une quelconque des revendications 1 à 10, caractérisé en ce que l'extrémité de fixation (2) est munie d'évidements (12, 13) destinés à la transmission du couple de rotation par crabotage.

12. Outil de perçage selon l'une quelconque des revendications 1 à 11, caractérisé en ce que l'outil de perçage (1) est conçu en forme de perceuse avec effet de percussion.

13. Procédé de fabrication d'un outil de perçage selon l'une quelconque des revendications 1 à 12, caractérisé par les étapes suivantes :
a) fabrication de l'hélice (4) par enroulement d'un matériau autour d'un corps cylindrique, dont le diamètre extérieur est inférieur au diamètre extérieur du corps de base (3) ;
b) détente de l'hélice (4) sur le corps cylindrique pour augmenter le diamètre intérieur de celle-ci ;
c) retrait de l'hélice (4), lorsque l'hélice (4) est à l'état détendu ;
d) mise en place du corps de base (3) dans l'hélice (4) détendue ; et
e) assemblage par frettage de l'hélice (4) sur le corps de base (3).

14. Procédé de fabrication d'un outil de perçage selon l'une quelconque des revendications 1 à 12, caractérisé par les étapes suivantes :
a) fabrication de l'hélice (4) par enroulement d'un matériau autour d'un corps cylindrique, dont le diamètre extérieur est inférieur au diamètre extérieur du corps de base (3) ;
b) application d'une force sur l'hélice (4) pour augmenter le diamètre intérieur de celle-ci ;
c) retrait du corps cylindrique, lorsque l'hélice (4) est à l'état précontraint ;
d) mise en place du corps de base (3) dans l'hélice (4) précontrainte ; et
e) assemblage par frettage de l'hélice (4) sur le corps de base (3).

15. Procédé selon la revendication 14, caractérisé en ce que l'étape b) est exécutée par l'application sur l'hélice (4) d'une force axiale et/ou d'un couple de rotation à l'encontre du sens d'enroulement de l'hélice.

16. Procédé selon l'une quelconque des revendications 13 à 15, caractérisé en ce que l'étape d) est exécutée par coulissement axial et par enfoncement en tournant du corps de base (3) dans l'hélice (4).

17. Procédé selon l'une quelconque des revendications 13 à 16, caractérisé en ce que l'hélice (4) est réalisée en acier plat.
